# FASCICULE DE BREVET EUROPEEN

(11) **EP 2 487 473 B1**
(45) Date de publication et mention de la délivrance du brevet: **05.06.2013**
(21) Numéro de dépôt: 12153761.7
(22) Date de dépôt: 03.02.2012
(51) Int. Cl.: G01F 25/00, B67D 7/08

(54) **Dispositif de piégeage des vapeurs de carburant dans la jauge d'un ensemble de jaugeage d'un appareil distributeur de carburant liquide lors de cette jauge**
Aufnahmevorrichtung für Kraftstoffdämpfe im Messstab einer Eichanordung eines Verteilerapparats von Flüssigkraftstoff bei dieser Messung
Device for trapping fuel vapours in the gauge of a set of gauges of a device for distributing liquid fuel during said gauge

(30) Priorité: 14.02.2011 FR 1151163
(43) Date de publication de la demande: 15.08.2012
(73) Titulaire: Tokheim Holding B.V., 5531 AD Bladel (NL)
(72) Inventeur: Cloutier, Philippe, 14320 May Sur Orne (FR)
(74) Mandataire: Cabinet HERRBURGER

(56) Documents cités:
- FR-A1- 2 955 658
- US-A1- 2009 188 298

## Description

La présente invention a pour objet un ensemble de jaugeage d'un appareil distributeur de carburant liquide d'une station service.

Un tel appareil distributeur de carburant est classiquement d'une part branché sur un circuit de distribution de carburant relié à une cuve de stockage et d'autre part équipé d'un mesureur volumétrique, en règle générale d'un mesureur à pistons à course réglable coopérant avec un afficheur, ainsi que d'un tuyau flexible d'alimentation en carburant relié à un pistolet distributeur muni d'un embout.

Ces appareils distributeurs de carburant doivent être soumis régulièrement à des opérations de jaugeage pour satisfaire aux exigences de la métrologie légale.

Pour la mise en oeuvre de ces opérations de jaugeage, on utilise des ensembles de jaugeage comportant essentiellement une jauge en règle générale métallique comprenant un corps de jauge de volume prédéfini équipé d'une ouverture de sortie pouvant être fermée par une vanne de vidage de jauge, ainsi qu'un col de jauge équipé d'une graduation et dans lequel l'embout du pistolet distributeur peut être inséré pour permettre de remplir la jauge de carburant.

Lors d'une opération de jaugeage, on insère l'embout du pistolet distributeur dans le col de jauge et on verse du carburant dans la jauge jusqu'à la graduation située sur le col de celle-ci.

On lit ensuite le volume ainsi introduit dans la jauge sur cette graduation et on compare ce volume lu au volume affiché sur l'appareil distributeur.

En cas de différence entre ces deux volumes, on actionne des moyens d'ajustement du mesureur volumétrique (des roues dentelées qui permettent de régler la course des pistons dans le cas d'un mesureur volumétrique à pistons) qui permettent de régler le volume cyclique du mesureur équipant l'appareil distributeur de façon à obtenir l'égalité de ces volumes.

Après avoir effectué cette mesure, on vide la jauge dans un réservoir de collecte du carburant qui peut être constitué par la cuve de stockage de la station service ou par un réservoir indépendant, ce en branchant sur l'ouverture de sortie du corps de jauge, une canalisation de vidage en règle générale flexible reliée à ce réservoir de collecte et en ouvrant la vanne de vidage de jauge.

Il est à noter que la métrologie légale impose que le jaugeage des appareils distributeurs de carburant, soit effectué avec une précision au millième.

Pour respecter cette exigence, il est nécessaire d'exclure toute erreur de mesure consécutive à des phénomènes de dilatation ou de rétraction de la jauge du fait de différences entre la température du carburant situé dans la cuve de stockage de la station service qui est en règle générale souterraine et la température de la jauge sèche qui sort notamment d'un camion de transport.

Une telle différence de température qui peut être de l'ordre de 20°C, notamment en été, peut en effet entraîner des phénomènes de dilatation ou de rétraction de la jauge de nature à fausser les mesures.

Pour remédier à ce problème, avant l'opération de jaugeage proprement dite qui nécessite en règle générale la moyenne de deux ou de trois mesures, il est nécessaire d'effectuer une étape de mouillage préalable consistant à remplir la jauge au maximum puis à la vider dans le réservoir de collecte du carburant pour la mettre en température.

Lors de cette étape de mouillage préalable, une fine pellicule de carburant reste collée sur les parois de la jauge.

Or, la présence de cette fine pellicule de carburant peut être source de fluctuations du résultat obtenu lors du jaugeage ultérieur.

En effet, la quantité de carburant ainsi mesurée n'est pas la même si après avoir effectué l'opération précédente, on a fermé la vanne de vidage de jauge dès la sortie de la dernière goutte de carburant ou si l'on a prévu auparavant un laps de temps d'égouttage permettant de sécher la jauge.

Pour éviter les imprécisions liées à ces fluctuations des résultats de mesure, la métrologie légale impose de respecter une procédure de vidage particulière après chaque mesure.

A cet effet, il est nécessaire d'équiper l'ensemble de jaugeage d'un verre viseur branché sur l'ouverture de sortie du corps de jauge et de monter la canalisation de vidage reliée au réservoir de collecte du carburant en sortie de ce verre viseur.

Lors du vidage de la jauge le carburant s'écoule tout d'abord en flux continu puis goutte à goutte.

Le verre viseur permet d'observer le début de cet écoulement en goutte à goutte suivant le flux continu.

Or dans ce contexte et pour uniformiser les résultats de mesure, la métrologie légale impose de ne fermer la vanne de vidage de jauge que 30 secondes après l'observation du début du goutte à goutte.

Indépendamment de ce qui précède, on s'est rendu compte que, lors d'une opération de jaugeage classique, le volume lu sur la graduation équipant le col de jauge, est en fait inférieur au volume de carburant réellement déversé dans celle-ci du fait de pertes non négligeables consécutives au jeu existant entre l'embout du pistolet distributeur et les parois du col de jauge.

Cette absence d'étanchéité à ce niveau, entraîne plus précisément deux sources de perte.

La première de ces sources de pertes, est liée au fait que la pression atmosphérique est inférieure à la pression de vapeur saturante du carburant, c'est-à-dire à la pression d'équilibre entre le carburant en phase liquide et le carburant en phase vapeur.

Lors d'une opération de jaugeage classique, la partie interne de la jauge est initialement remplie d'air se trouvant à la pression atmosphérique.

Au cours du remplissage, une certaine proportion du carburant liquide déversé s'évapore pour permettre de maintenir l'équilibre de pression.

Il en résulte que la quantité d'air refoulée vers l'extérieur lors du remplissage de la jauge par le jeu existant entre l'embout du pistolet distributeur et les parois du col de jauge (qui correspond au volume de carburant déversé), renferme obligatoirement une proportion non négligeable de carburant en phase vapeur.

La seconde source de pertes de carburant est liée au fait que, lors de chaque opération de jaugeage, il se produit autour du jet de carburant sortant de l'embout du pistolet distributeur, une brumisation pouvant engendrer des gouttelettes de nature à s'évaporer ou à être évacuées hors de la jauge avec l'air refoulé lors du remplissage, par le jeu existant entre les parois du col de jauge et le pistolet distributeur.

De telles pertes qui affectent principalement l'essence traditionnelle, nettement plus volatile que le carburant diesel, dépendent de divers paramètres, en particulier de la nature du carburant distribué, de la température et de la saison; elles peuvent s'élever jusqu'à 3/1000 de la quantité de carburant distribuée dans le cas d'une jauge de 20 litres, ce qui entraîne des pertes importantes pour les gérants des stations-services, du fait d'un réglage erroné des mesureurs des appareils distributeurs.

Pour remédier à cet inconvénient, on a préalablement eu l'idée de maintenir l'étanchéité entre l'embout du pistolet distributeur et les parois du col de jauge pendant une opération de jaugeage, et également de maintenir constamment, pendant une telle opération, la partie interne de la jauge, c'est-à-dire le ciel de jauge surmontant le carburant distribué à la pression de saturation dans les conditions de température et de pression applicables à la mesure.

A cet effet, il a été proposé d'équiper les ensembles de jaugeage d'une part d'un élément connecteur monté à l'extrémité libre du col de jauge de façon à permettre de garantir l'étanchéité entre l'atmosphère et la partie interne de la jauge, en particulier après insertion de l'embout du pistolet distributeur dans le col de jauge, et d'autre part de moyens d'équilibrage permettant d'éviter l'évaporation du carburant lors d'une opération de jaugeage de façon à maintenir constamment le ciel de jauge à la pression de vapeur saturante du carburant.

Un ensemble de jaugeage ainsi équipé, est à titre d'exemple, décrit dans le document non publié FR 10 50 463.

On s'est toutefois rendu compte, conformément à l'invention, que de tels moyens étaient insuffisants pour permettre de garantir que les vapeurs renfermées dans la jauge ne soient constamment constituées que par des vapeurs de carburant et non par un mélange vapeurs de carburant/air.

En effet, du fait du processus de vidage particulier de la jauge, imposé par la métrologie légale, des vapeurs de carburant peuvent s'échapper par la canalisation de vidage pendant le laps de temps d'égouttage précédant la fermeture de la vanne de vidage de jauge et être remplacées par de l'air.

La présente invention a pour objet de remédier à cet inconvénient en proposant un ensemble de jaugeage d'un appareil distributeur de carburant liquide comprenant un dispositif de piégeage des vapeurs de carburant dans la jauge de cet ensemble lors du vidage de cette jauge.

Il est à noter que le document US 2009/188,298 A1 formule également le problème consistant à maintenir le volume interne d'une jauge saturé en vapeurs de carburant, mais résout ce problème de manière différente en connectant par un conduit le réservoir de collecte du carburant avec le col de jauge.

Selon l'invention, le dispositif de piégeage est constitué par un tronçon de canalisation rigide en forme de U carré ou arrondi, formant siphon branché sur la canalisation de vidage de façon à bloquer le passage des vapeurs de carburant vers le réservoir de collecte du carburant.

Ce tronçon de canalisation formant siphon comporte ainsi deux branches latérales entourant une branche centrale, basse située à un niveau inférieur à celui du verre viseur et de la canalisation de vidage.

Un tel tronçon de canalisation est, de préférence, monté directement en sortie du verre viseur.

Lors de la première phase du processus de vidage de la jauge pendant laquelle le carburant s'écoule en flux continu, la branche centrale et la partie inférieure des branches latérales du tronçon de canalisation formant siphon se remplissent de carburant

Lors de la seconde phase ou phase d'égouttage précédant la fermeture de la vanne de vidage de jauge pendant laquelle le carburant s'écoule en goutte à goutte, la branche centrale et la partie inférieure des branches latérales de ce tronçon de canalisation, sont toujours remplies de carburant de façon à bloquer le passage des vapeurs provenant de la jauge, ce qui permet de garantir que celle-ci soit effectivement remplie de vapeurs de carburant lors de l'opération de jaugeage suivante.

Selon l'invention, la canalisation de vidage et le tronçon de canalisation formant siphon sont de préférence amovibles.

Après la fermeture de la vanne de vidage de jauge, le tronçon de canalisation formant siphon ainsi que la canalisation de vidage, peuvent ainsi être démontés de façon à permettre de vider complètement ce tronçon du carburant résiduel.

La jauge est alors complètement saturée en vapeurs de carburant et est prête pour l'opération de jaugeage suivante.

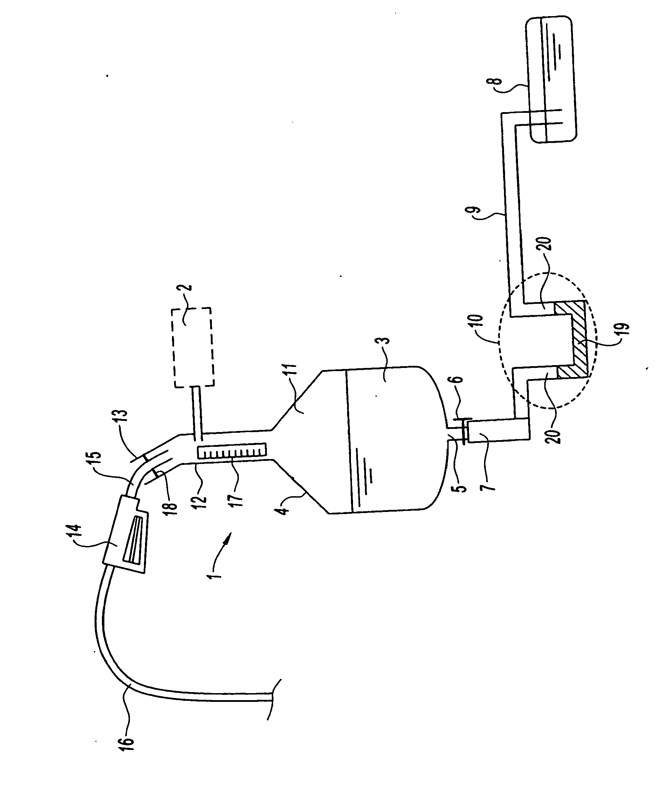

Les caractéristiques de l'ensemble de jaugeage qui fait l'objet de l'invention, seront décrites plus en détail en se référant au dessin non limitatif annexé qui est un schéma représentant un tel ensemble de jaugeage.

Selon la figure, l'ensemble de jaugeage comprend une jauge 1 de contenance prédéfinie comportant un corps de jauge 4 et un col de jauge 12 muni d'une ouverture d'entrée 13.

Cette ouverture d'entrée 13, est destinée à recevoir l'embout 15 du pistolet distributeur 14 monté à l'extrémité du tuyau flexible 16 d'alimentation en carburant liquide d'un appareil distributeur à jauger de façon à permettre le remplissage de la jauge 1 par du carburant liquide 3.

Le corps de jauge 4 est équipé à sa partie inférieure, d'une ouverture de sortie 5 pouvant être fermée par une vanne de vidage de jauge manuelle 6.

Le col de jauge 12 est, quant à lui, équipé d'une graduation transparente 17 permettant à un technicien de maintenance de lire le volume de carburant liquide 3 déversé lors d'un jaugeage.

Un élément connecteur 18 est monté à l'extrémité libre de ce col de jauge 12 de façon à permettre de garantir l'étanchéité entre l'atmosphère et la partie interne de la jauge 1, en particulier après insertion de l'embout 15 du pistolet distributeur 14.

Des moyens d'équilibrage 2 schématisés en pointillés permettent d'éviter l'évaporation du carburant 3 déversé dans la jauge 1 de façon à maintenir constamment la partie interne de celle-ci, à la pression de saturation de vapeur saturante du carburant dans les conditions de température et de pression applicables à la mesure.

Par suite, le ciel de jauge 11 est constamment rempli de vapeurs de carburant et non d'un mélange vapeurs de carburant/air.

En outre et selon la figure, un verre viseur 7 ayant pour fonction de permettre d'effectuer la procédure de vidage de la jauge 1 conformément aux prescriptions de la métrologie légale, est branché sur l'ouverture de sortie 5 du corps de jauge 4.

Un tronçon de canalisation rigide en forme de U 10 comportant deux branches latérales 20 entourant une branche centrale basse 19 est monté directement en sortie du verre viseur 7.

Lors du vidage du carburant, les deux branches latérales 20 sont sensiblement verticales et la branche centrale basse 19 est sensiblement horizontale.

Une canalisation de vidage 9 reliée à un réservoir de collecte du carburant 8, est montée en sortie du tronçon de canalisation formant siphon 10.

La canalisation de vidage 9 peut être flexible ou rigide.

La canalisation de vidage 9 ainsi que le tronçon de canalisation formant siphon 10, sont amovibles de l'ensemble de jaugeage.

A l'issue d'une opération de jaugeage et suite à l'ouverture de la vanne de vidage de jauge 6 le carburant liquide 3 déversé dans le corps de jauge 4, est vidé par l'ouverture de sortie 5 vers le réservoir de collecte de carburant 8.

Lors de ce vidage, le carburant liquide 3 passe dans le verre viseur 7 puis dans le tronçon de canalisation 10 puis dans la canalisation de vidage 9.

Conformément aux prescriptions de la métrologie légale, la procédure de vidage s'effectue en deux phases, à savoir une première phase pendant laquelle le carburant liquide 3 s'écoule en flux continu dans le verre viseur 7, le tronçon de canalisation 10 et la canalisation de vidage 9 jusqu'au réservoir de collecte 8, et une seconde phase ou phase d'égouttage précédant la fermeture de la vanne de vidage de jauge 6 pendant laquelle le carburant 3 s'écoule en goutte à goutte.

Pendant la première phase, les vapeurs de carburant présentes dans le ciel de jauge 11 qui sont plus lourdes que l'air, ne peuvent pas sortir du corps de jauge 4.

Pendant la seconde phase, la branche centrale 19 et la partie inférieure des branches latérales 20 du tronçon de canalisation 10 qui fait office de siphon, demeurent remplies de carburant liquide 3, comme schématisé en hachuré sur la figure, de façon à bloquer les vapeurs de carburant.

Il est aussi possible de garantir que la partie interne de la jauge 1 ne renferme que des vapeurs de carburant et non pas un mélange vapeurs de carburant/air.

Après la fermeture de la vanne de vidage de jauge 6 à la fin de l'étape d'égouttage, le tronçon de canalisation formant siphon 10, peut être démonté puis complètement vidé du carburant résiduel.

Le corps de jauge 4 est alors complètement saturé en vapeurs de carburant et la jauge 1 est prête pour l'opération de jaugeage suivante.

### NOMENCLATURE

- 1: Jauge
- 2: Moyens d'équilibrage
- 3: Carburant liquide
- 4: Corps de jauge
- 5: Ouverture de sortie
- 6: Vanne de vidage de jauge
- 7: Verre viseur
- 8: Mesureur de collecte du carburant
- 9: Canalisation de vidage
- 10: Tronçon de canalisation en forme de U
- 11: Ciel de jauge
- 12: Col de jauge
- 13: Ouverture d'entrée
- 14: Pistolet distributeur
- 15: Embout
- 16: Tuyau flexible
- 17: Graduation
- 18: Elément connecteur
- 19: Branche centrale
- 20: Branches latérales

## Revendications

1. Ensemble de jaugeage d'un appareil distributeur de carburant liquide,
cet ensemble de jaugeage comportant :
- une jauge (1) comprenant un corps de jauge (4) de volume prédéfini équipé d'une ouverture de sortie (5) pouvant être fermée par une vanne de vidage de jauge (6) ainsi qu'un col de jauge (12) équipé d'une graduation (17) et dans lequel un embout (15) d'un pistolet distributeur (14) de l'appareil distributeur de carburant liquide peut être inséré pour permettre de remplir la jauge (1) de carburant,
- un élément connecteur (18) monté à l'extrémité libre du col de jauge (12) de façon à permettre de garantir l'étanchéité entre l'atmosphère et la partie interne de la jauge, en particulier après insertion de l'embout (15) du pistolet distributeur (14) dans le col de jauge (12),
- des moyens d'équilibrage (2) permettant d'éviter l'évaporation du carburant lors d'une opération de jaugeage de façon à maintenir constamment la partie interne de la jauge (1) à la pression de saturation dans les conditions de température et de pression applicables à la mesure,
- un verre viseur (7) branché sur l'ouverture de sortie (5) du corps de jauge (4), et
- une canalisation de vidage (9) montée en sortie du verre viseur (7) et reliée à un réservoir de collecte du carburant (8),
**caractérisé en ce qu'**
il comprend un dispositif de piégeage des vapeurs de carburant constitué par un tronçon de canalisation rigide en forme de U formant siphon (10) branché sur la canalisation de vidage (9) de façon à bloquer le passage des vapeurs de carburant vers le réservoir de collecte du carburant (8).

2. Ensemble de jaugeage selon la revendication 1,
**caractérisé en ce que**
le tronçon de canalisation formant siphon (10) est monté directement en sortie du verre viseur (7).

3. Ensemble de jaugeage selon l'une quelconque des revendications 1 et 2,
**caractérisé en ce que**
la canalisation de vidage (9) et le tronçon de canalisation formant siphon (10), sont amovibles.

## Patentansprüche

1. Eichsatz für eine Zapfanlage für Flüssigkraftstoff, beinhaltend:
- ein Eichgerät mit einem Eichgerätekörper (4) vorgegebenen Volumens, versehen mit einer Austrittsöffnung (5), die von einem Eichgerätentleerungsventil (6) verschlossen werden kann, sowie mit einem eine Skala (17) aufweisenden Eichgerätehals (12), in den zur Befüllung des Eichgerätes (1) mit Kraftstoff ein Endstück (15) einer Zapfpistole (14) der Zapfanlage für Flüssigkraftstoff eingeführt werden kann,
- ein an das freie Ende des Eichgerätehalses (12) montierte Anschlusselement (18), damit die Dichtigkeit zwischen Atmosphäre und Eichgerätsinnenteil insbesondere nach dem Einführen des Endstücks (15) der Zapfpistole (14) in den Eichgerätehals (12) gewährleistet werden kann,
- Ausgleichsmittel (2) zur Vermeidung der Kraftstoffverdunstung bei einem Eichvorgang, so dass unter den der Messung anwendbaren Temperatur- und Druckbedingungen der Innenteil des Eichgerätes (1) stets auf Sättigungsdruck gehalten wird,
- ein Sichtglas (7), das an der Austrittsöffnung (5) des Eichgerätekörpers (4) angeschlossen ist, und
- eine am Austritt des Sichtglases (7) angebrachte und mit einem Kraftstoffsammelbehälter (8) verbundene Entleerungsleitung (9),
**dadurch gekennzeichnet, dass**
er eine aus einer steifen U-förmigen ein Siphon (10) bildenden Leitung bestehende Fangvorrichtung für die Kraftstoffdämpfe aufweist, wobei die Fangvorrichtung so an die Entleerungsleitung (9) angeschlossen ist, dass sie den Durchgang der Kraftstoffdämpfe zu dem Kraftstoffsammelbehälter (8) blockiert.

2. Eichsatz nach Anspruch 1, **dadurch gekennzeichnet, dass** das den Siphon (10) bildende Leitungsstück unmittelbar am Austritt der Sichtglases (7) montiert ist.

3. Eichsatz nach einem der Ansprüche 1 und 2, **dadurch gekennzeichnet, dass** die Entleerungsleitung (9) und das den Siphon (10) bildende Leitungsstück abnehmbar sind.

## Claims

1. Gauge assembly for a device for dispensing liquid fuel, this gauge assembly comprising:
- a gauge (1) comprising a gauge member (4) which has a predefined volume and which is provided with an output opening (5) which can be closed by a gauge discharge valve (6) and a gauge neck (12) which is provided with a graduation (17) and in which an end-piece (15) of a dispensing nozzle (14) of the liquid fuel dispensing device may be inserted in order to allow the gauge (1) to be filled with fuel,
- a connector element (18) which is mounted at the free end of the gauge neck (12) in order to ensure sealing between the atmosphere and the internal portion of the gauge, in particular after insertion of the end-piece (15) of the dispensing nozzle (14) in the gauge neck (12),
- balancing means (2) which allow evaporation of the fuel to be prevented during a gauging operation in order to constantly maintain the internal portion of the gauge (1) at the saturation pressure under temperature and pressure conditions applicable to the measurement,
- a viewing glass (7) which is connected to the outlet opening (5) of the gauge member (4), and
- a discharge conduit (9) which is mounted at the outlet of the viewing glass (7) and which is connected to a fuel collection reservoir (8),
**characterised in that**
it comprises a fuel vapour trapping device which is constituted by a rigid U-shaped conduit portion which forms a siphon (10) which is connected to the discharge conduit (9) in order to block the passage of the fuel vapours in the direction towards the fuel collection reservoir (8).

2. Gauge assembly according to claim 1,
**characterised in that**
the conduit portion which forms a siphon (10) is assembled directly at the outlet of the viewing glass (7).

3. Gauge assembly according to either claim 1 or claim 2,
**characterised in that**
the discharge conduit (9) and the conduit portion which forms a siphon (10) are removable.
